## Europäisches Patentamt

## European Patent Office

## Office européen des brevets

(19)

(11) Numéro de publication: **0 267 132 B1**

(12) **FASCICULE DE BREVET EUROPEEN**

(45) Date de publication du fascicule du brevet:
**18.07.90**

(21) Numéro de dépôt: **87420298.9**

(22) Date de dépôt: **30.10.87**

(51) Int. Cl.⁵: **B21D 39/06**, F16L 13/14, F16D 1/06

(54) **Assemblage par emmanchement à force d'un tube métallique circulaire dans un logement ovale.**

(30) Priorité: **03.11.86 FR 8615442**

(43) Date de publication de la demande:
**11.05.88 Bulletin 88/19**

(45) Mention de la délivrance du brevet:
**18.07.90 Bulletin 90/29**

(84) Etats contractants désignés:
**AT BE CH DE ES GB GR IT LI LU NL SE**

(56) Documents cités:
**EP-A- 0 143 062**
**US-A- 1 950 947**

(73) Titulaire: **CEGEDUR PECHINEY RHENALU, 23, rue Balzac, F-75008 Paris(FR)**

(72) Inventeur: **Vannier, Gérard, La Guérinière Glainans, F-25340 Clerval(FR)**
Inventeur: **Saugier, Yves, Parc du Château-Marcilly sur Seine, F-51260 Anglure(FR)**
Inventeur: **Baril, Jacques, Résidence Le Petit Bois, F-38140 La Murette(FR)**
Inventeur: **Re, Angel, 24, rue Hector Blanchet, F-38500 Voiron(FR)**

(74) Mandataire: **Séraphin, Léon et al, PECHINEY 28, rue de Bonnel, F-69433 Lyon Cedex 3(FR)**

## Description

L'invention concerne un méthode de liaison par emmanchement à force d'un tube métallique cylindrique circulaire dans un logement de section droite ovale, ce logement étant soit, la cavité interne d'un manchon, soit une ouverture percée dans une plaque épaisse. On connait un type d'assemblage analogue entre un tube cylindrique circulaire et un logement de section circulaire, par la demande de brevet français FR-A-2 553 690. Cette demande de brevet décrit et revendique une méthode d'assemblage d'un tube circulaire dans un manchon muni d'un logement de section droite circulaire et présentant à son entrée un double chanfrein circulaire. Pour assurer une bonne résistance à la torsion axiale de l'assemblage, l'alésage du manchon présente une (ou plusieurs) cannelure(s) interne(s) longitudinale(s). Cependant, la réalisation de ces cannelures ou rainures représente une opération d'usinage supplémentaire souvent délicate et surtout coûteuse.

Aussi le problème qui se pose à l'homme de l'art est l'obtention d'un assemblage présentant une résistance à la torsion équivalente, mais en supprimant les cannelures. Ce problème est résolu, selon l'invention, en réalisant un assemblage par emmanchement à force d'un tube circulaire dans le logement d'un manchon ou d'une plaque caractérisé en ce que ce logement comporte une surface latérale interne composée d'une partie tronconique de section droite ovale dont les génératrices font avec l'axe un angle $\alpha$ compris entre 0,5 et 5°, prolongé par un tronc de cône circulaire de même axe, dont le ¼ angle au sommet $\beta$ est compris entre 5 et 20°, dans lequel le tube circulaire qui présente éventuellement à sa surface latérale externe, une partie tronconique faisant un angle $\gamma$ avec l'axe du tube, est emmanché à force; dans ce dernier cas, on a $\gamma \geq \beta$ et la partie tronconique du tube est obtenue soit par usinage soit par conformation à froid.

De préférence, le manchon ou la plaque sont avantageusement obtenus par moulage ce qui permet de réaliser économiquement les logements ovales, directement aux cotes finales, sans usinage et ce, avec une qualité de surface favorable à une bonne tenue mécanique de l'assemblage. Le moulage en coquille apparaît particulièrement bien adapté.

Pour assurer un serrage suffisant, il est préférable que la longueur de l'ovale à extrémité du tube une fois en place, soit inférieure à la circonférence initiale du tube cylindrique ou à la petite circonférence du tronc de cône de sa surface externe, s'il en comporte un.

L'invention sera mieux comprise à l'aide de divers exemples de réalisation donnés ci-après, illustrés par les figures suivantes :

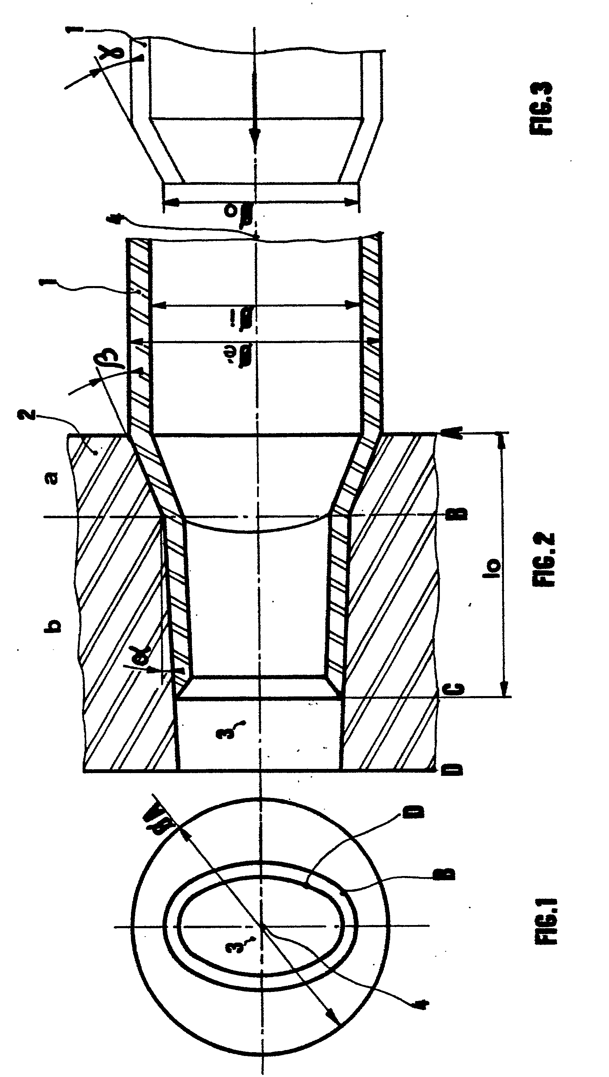

. La figure 1 représente une vue en bout d'un logement selon l'invention situé dans une plaque moulée.
. La figure 2 représente une coupe axiale suivant un grand axe de l'ellipse de l'assemblage tube-plage réalisé suivant l'invention.
. La figure 3 représente une coupe axiale de l'extrémité du tube avant emmanchement.

Les figures représentent l'assemblage d'un tube (1) circulaire de diamètre extérieur $\varnothing_e$, de diamètre intérieur $\varnothing_i$, présentant éventuellement à son extrémité une surface tronconique dont le diamètre externe est $\varnothing_o$.

Ce tube est assemblé sur une plaque 2 présentant une ouverture 3 composée d'un tronc de cône circulaire (dans la zone a) dont le ¼ angle au sommet est $\beta$ et dont le diamètre d'ouverture est $\varnothing_A$ qui se raccorde à un tronc de cône (dans la zone b) dont la directrice est un ovale B et dont les génératrices font avec l'axe commun 4 un angle $\alpha$ . La longueur de l'ovale C situé à l'extrémité du tube 1 mis en place est de préférence inférieure à $\pi \varnothing_o$ (ou $\pi \varnothing_e$ si le tube n'est pas chanfreiné).

### Example 1

Des emmanchements analogues à ceux représentés aux figures 1,2 et 3, ont été réalisés à partir :
- d'un tube circulaire de diamètre extérieur $\varnothing_e$= 28,2 mm, de 1,6 mm d'épaisseur présentant un chanfrein d'extrémité $\varnothing_o$=23,4 mm avec un angle $\gamma$ = 11° en alliage d'Al 5086 et à l'état H16 selon les désignations de l'Aluminium Association;
- de manchons en alliage d'Al A-S 7 G.0.6, moulés en coquilles à l'état Y33 et présentant des logements de diverses géométrie et état de surface. Dans tous les cas, le chanfrein d'entrée usiné par tournage fin a une ouverture $\varnothing_A$= 28,6 mm, un angle $\beta$ =11° et une longueur axiale de 6 mm environ. La partie (b) de chacun des manchons présente les caractéristiques suivantes :

| | Géométrie | Etat | Dimensions à 20 mm de l'extrémité d'entrée (A) (mm) | | α (o) |
|---|---|---|---|---|---|
| 1 | Cône elliptique | brut de moulage | axes | a = 23,4 mm b = 22,9 mm | 1 |
| 2 | Cône circulaire | brut de moulage | | ø 23,15 mm | 1 |
| 3 | Cône circulaire | usiné fin | | ø 23,15 mm | 1 |
| 4 | Cylindre circul. | usiné fin | | ø 23,15 mm | 0 |

La longueur axiale d'emmanchement est dans tous les cas, $l_o = 35$ mm.

On a mesuré sur les assemblages ainsi réalisés la moyenne et l'écart type des efforts d'emmanchement axial, d'arrachement axial et à torsion axiale, sur 5 assemblages par cas.

Les résultats sont reportés dans le TABLEAU I ci-après. On peut constater, que la géométrie ovale apporte rapport à la géométrie circulaire un gain appréciable en couple de torsion, alors que l'état de surface brute de moulate améliore l'effort d'arrachement par rapport à l'état usiné fin.

Enfin, bien qu'augmentant l'effort d'emmanchement, la géométrie conique apporte un gain substantiel d'effort d'arrachement par rapport à la géométrie cylindrique.

| Repère du type d'assemblage | Définition du logement | Effort d'assemblage A en N | | Effort d'extraction E en N | | Couple de torsion C en N.m | |
|---|---|---|---|---|---|---|---|
| | | $\bar{A}$ | $\sigma_A$ | $\bar{E}$ | $\sigma_E$ | $\bar{C}$ | $\sigma_C$ |
| 1 | ovale conique brut moulage | 24 800 | 1 050 | 19 050 | 1 300 | >320 [a] | |
| 2 | rond conique brut moulage | 25 050 | 1 060 | 19 100 | 1 300 | 230 | 27 |
| 3 | rond conique usiné | 24 450 | 5 350 | 14 700 | 2 550 | 180 | 55 |
| 4 | rond cylindrique usiné | 20 050 | 5 320 | 10 550 | 650 | 165 | 52 |

| Assemblages Comparés | paramètre | Influence sur les caractéristiques | | | | | |
|---|---|---|---|---|---|---|---|
| | | Effort d'assemblage A | | Effort d'extraction E | | Couple de torsion C | |
| | | $\bar{A}$ | $\sigma_A$ | $\bar{E}$ | $\sigma_E$ | $\bar{C}$ | $\sigma_C$ |
| 1-2 | Ovale / rond | $\approx$ | $\approx$ | $\approx$ | $\approx$ | > 40% | |
| 2-3 | Brut / usiné | $\approx$ | $\times \frac{1}{5}$ | + 30% | $\times \frac{1}{2}$ | + 30% | $\times \frac{1}{2}$ |
| 3-4 | Conique / Cylindrique | + 20% | $\approx$ | + 40% | $\approx$ | + 10% | $\approx$ |

(a) déformation du tube, assemblage intact

EP 0 267 132 B1

**Revendications**

1. Méthode de liaison par emmanchement à force d'un tube cylindrique (1) circulaire dans le logement (3) d'une plaque ou d'un manchon (2), selon lequel le logement est limité par une surface latérale interne composée en partant de l'intérieur de ce logement, d'une partie divergente tronconique (b) de section droite ovale dont les génératrices font avec l'axe un angle $\alpha$ compris entre 0,5 et 5°, prolongé à l'entrée du tube cylindrique par une partie divergente en forme d'un tronc de cône circulaire (a) de même axe dont le demi-angle au sommet $\beta$ est compris entre 5 et 20°.

2. Méthode de liaison selon la revendication 1, caractérisée en ce que le tube (1) présente avant assemblage, une surface externe circulaire dont le demi-angle au sommet $\gamma$ est supérieur ou égal à $\beta$ et dont le dimètre externe à l'extrémité du tube est inférieur au diamètre d'entrée $\varnothing_A$ du logement.

3. Méthode de liaison selon l'une des revendications 1 ou 2 caractérisée en ce que la surface latérale du tronc de cône de section ovale (b) est à l'état brut du moulage.

4. Méthode de liaison selon l'une des revendications 1 à 3 caractérisée en ce que la longueur de l'ovale du logement au droit de l'extrémité du tube (C) mis en place est inférieure à $\pi\varnothing_o$ ($\pi\varnothing_e$ si le tube est non chanfreiné), où
$\varnothing_o$ = le diamètre externe à l'extrémité d'un tube chanfreiné, et
$\varnothing_e$ = le diamètre externe à l'extrémité d'un tube non chanfreiné.

**Claims**

1. A method of connection resulting from the force-fitting of a circular cylindrical tube (1) in the housing (3) of a plate or sleeve (2) in which this housing is limited by an internal lateral surface composed, starting from the interior of this housing, of a divergent truncated cone shaped portion (b) of oval cross-section of which the generatrices form with the axis an angle $\alpha$ of between 0.5 and 5° which is extended at the inlet of the cylindrical tube by a divergent part in the form of a circular truncated cone (a) having the same axis, of which half the angle at the vertex $\beta$ is between 5 and 20°.

2. A method of connection according to claim 1, characterised in that the tube (1) has, prior to connection, a circular external surface of which half the angle at the vertex $\gamma$ is greater than or equal to $\beta$ and of which the external diameter $\varnothing_o$ at the end of the tube is smaller than the inlet diameter $\varnothing_A$ of the housing.

3. A method of connection according to one of claims 1 or 2, characterised in that the lateral surface of the truncated cone of oval section (b) is in the as-cast state.

4. A method of connection according to one of claims 1 or 3, characterised in that the length of the oval of the housing at the end of the installed tube (C) is less than $\pi\varnothing_o$ (or $\pi\varnothing_e$ if the tube is not bevelled), in which
$\varnothing_o$ = the external diameter at the end of a bevelled tube, and
$\varnothing_e$ = the external diameter of an unbevelled tube.

**Patentansprüche**

1. Verfahren zum Einpressen eines kreiszylinderförmigen Rohres (1) in ein Lager (3) einer Platte oder einer Muffe (2) zur Herstellung einer Verbindung, nachdem das Lager durch eine innere Seitenfläche begrenzt wird, die ausgehend vom Inneren des Lagers einerseits aus einem divergenten kegelstumpfförmigen Teil (b) mit ovalem Querschnitt besteht, dessen Erzeugenden mit der Achse einen Winkel $\alpha$ zwischen 0,5 une 5° einschließen, verlängert durch einen divergierenden Bereich am Eingang des zylinderförmigen Rohres in Form eines kreisförmigen Kegelstumpfes (a) mit der gleichen Achse, dessen spitzer Halbwinkel $\beta$ zwischen 5 und 20° liegt.

2. Verbindungsverfahren nach Anspruch 1, dadurch gekennzeichnet, daß das Rohr (1) vor dem Zusammensetzen eine äußere kreisrunde Oberfläche aufweist, dessen Halbwinkel $\gamma$ an der Spitze größer oder gleich $\beta$ ist und dessen äußerer Durchmesser am Ende des Rohres kleiner als der Eingangsdurchmesser des Lagers ist.

3. Verbindungsverfahren nach einem der Ansprüche 1 oder 2, dadurch gekennzeichnet, daß die Seitenfläche des Kegelstumpfes mit ovalem Querschnitt (b) im unbehandelten Gußzustand ist.

4. Verbindungsverfahren nach einem der Ansprüche 1 bis 3, dadurch gekennzeichnet, daß die Länge des ovalen Bereichs des Lagers gegenüber dem Ende des plazierten Rohres (C) kleiner als $\pi\varnothing_o$ ist (oder $\pi\varnothing_e$, wenn das Rohr nicht abgeschrägt ist), wobei
$\varnothing_o$ = der Außendurchmesser des abgeschrägten Rohrendes, und
$\varnothing_e$ = der Außendurchmesser eines nicht abgeschrägten Rohres ist.

FIG.1

FIG.2

FIG.3

EP 0 267 132 B1